# FASCICULE DE BREVET EUROPEEN

(11) **EP 1 604 240 B1**
(45) Date de publication et mention de la délivrance du brevet: **21.02.2007**
(21) Numéro de dépôt: 04720045.6
(22) Date de dépôt: 12.03.2004
(51) Int. Cl.: G02B 21/00, G02B 21/06

(54) **DISPOSITIF OPTIQUE CONFOCAL AVEC SEPARATEUR DE FAISCEAUX AMOVIBLE**
OPTISCHES KONFOKALES GERÄT MIT AUSTAUSCHBAREM STRAHLTEILER
CONFOCAL OPTICAL DEVICE WITH DETACHABLE BEAM SEPARATOR

(30) Priorité: 20.03.2003 FR 0303584; 28.10.2003 FR 0312697
(43) Date de publication de la demande: 14.12.2005
(73) Titulaire: Lauer, Vincent, 94130 Nogent sur Marne (FR)
(72) Inventeur: Lauer, Vincent, 94130 Nogent sur Marne (FR)
(86) Numéro de dépôt international: PCT/FR2004/000626
(87) Numéro de publication internationale: WO 2004/086124

(56) Documents cités:
- EP-A- 1 186 882
- DE-A- 19 824 460
- US-A1- 2002 097 485

## Description

### Domaine Technique

Il s'agit d'un dispositif optique confocal comprenant un moyen pour changer le miroir de séparation qui sépare le faisceau d'éclairage dirigé vers l'objet observé du faisceau à détecter provenant de l'objet observé.

### Technique antérieure

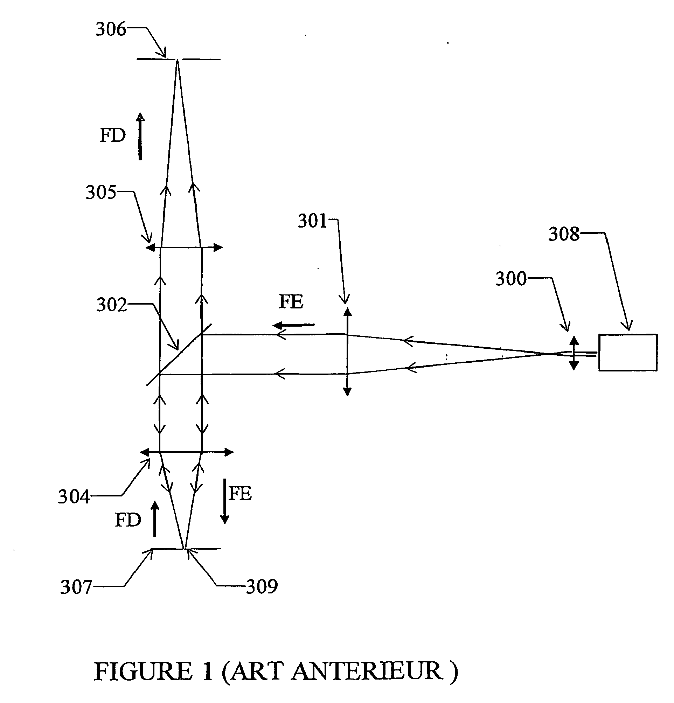

La figure 1 représente une partie d'un dispositif de optique confocal selon l'art antérieur. Un faisceau lumineux issu d'un laser 308 est élargi et collimaté par des lentilles 300, 301. Le faisceau d'éclairage FE ayant traversé la lentille 301, qui est sensiblement parallèle, est ensuite réfléchi par le miroir partiellement réfléchissant 302 puis il est renvoyé vers la lentille 304 qui peut être l'objectif du microscope ou une lentille intermédiaire. La lentille 304 focalise le faisceau d'éclairage issu d'un point du réseau 300 en un point éclairé 309 du plan image 307 qui peut être un plan image intermédiaire ou directement un objet observé. Le faisceau à détecter FD revenant du point éclairé retraverse en sens inverse la lentille 304 et traverse le miroir partiellement transparent 302. Il traverse la lentille 305 et parvient à un trou microscopique 306 qui a un rôle de filtrage et est placé dans un plan focal de la lentille 305. Sur la figure le miroir partiellement transparent 302 est dans une zone afocale, c'est-à-dire que le faisceau d'éclairage et le faisceau à détecter sont sensiblement parallèles dans cette zone. Toutefois en microscopie confocale le miroir partiellement transparent n'est pas nécessairement placé dans une zone afocale. Par exemple il peut également être placé à proximité immédiate du trou microscopique. Le miroir partiellement transparent 302 peut typiquement être un miroir dichroïque séparant les longueurs d'onde d'excitation et d'émission, dans le cas d'un microscope fonctionnant en fluorescence, ou un séparateur de faisceau neutre en longueur d'onde, pour l'observation de la lumière réfléchie par un objet à observer.

Pour que le système fonctionne le point éclairé 309 doit être conjugué au trou microscopique 306. Mais la précision de positionnement du miroir 302 est insuffisante pour qu'une telle conjugaison puisse être reproduite de manière fiable lorsque le miroir est remplacé par un autre ou supprimé puis remis en place. En effet, toute imprécision de positionnement du miroir modifie la direction du faisceau d'éclairage réfléchi par le miroir, et par conséquence déplace le point d'éclairage qui cesse d'être conjugué au trou microscopique. L'échange du miroir 302 est nécessaire par exemple, s'il s'agit d'un miroir dichroïque, pour changer de longueur d'onde d'excitation. Il peut également y avoir plusieurs lignes d'éclairage distinctes qui parviennent à la zone afocale et sont chacune superposées au faisceau à détecter par un miroir partiellement transparent. Dans ce cas, chaque miroir doit être amovible, de manière à ce qu'on puisse utiliser une ligne d'éclairage sans être gêné par le miroir correspondant à une autre ligne d'éclairage.

Par simplification on n'a pas fait figurer sur la figure 1 le dispositif de balayage qui peut par exemple être une paire de miroirs galvanométrique ou un dispositif de translation de l'échantillon. La figure 1 peut être adaptée au cas d'un éclairage multipoints en remplaçant la lentille 300 par un réseau de microlentilles, et en remplaçant le trou microscopique 306 par un réseau de trous microscopiques.

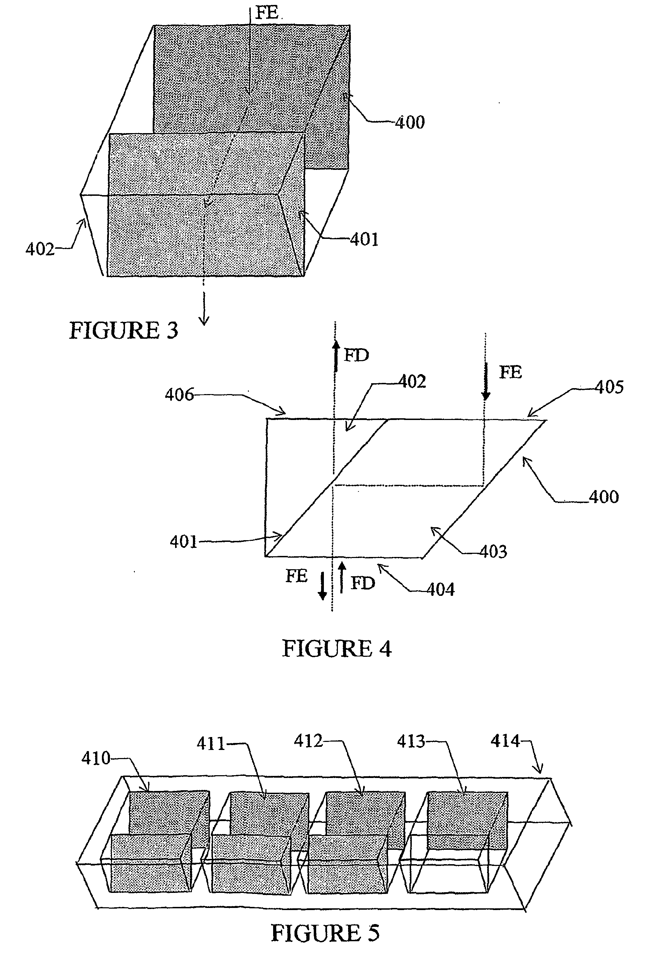

Le problème de la perte de conjugaison entre le point de focalisation du faisceau d'éclairage dans l'objet, qui est conjugué au point de focalisation virtuel du laser d'éclairage, et le trou microscopique de filtrage, lors d'un changement de miroir dichroïque est habituellement résolu de diverses manières:
a) en agrandissant considérablement l'image se formant dans le plan 306 de manière à remplacer le trou microscopique par un trou de dimensions plus élevées et en plaçant le miroir dichroïque à proximité de ce trou et non pas en zone afocale. Cette solution rallonge notablement les chemins optiques et n'est pas transposable au cas d'un réseau de trous microscopiques (éclairage multipoints). En effet dans ce dernier cas, agrandir l'image implique d'agrandir tout le réseau de trous microscopiques, ce qui mène à des dimensions du réseau qui sont incompatibles avec les dimensions normales d'un dispositif confocal.
b) en prévoyant un système de réajustement de la position du trou microscopique.
c) en combinant les solutions précédentes pour éviter des réajustements trop importants ou trop fréquents, sans rallonger excessivement le chemin optique.
d) en faisant passer le faisceau d'éclairage par le trou microscopique, et en plaçant le miroir dichroïque avant le trou microscopique sur le chemin du faisceau d'éclairage, donc après le trou microscopique sur le chemin du faisceau revenant de l'objet. Cette solution simplifie le système mais ne permet pas de régler la taille du trou microscopique sans affecter également le faisceau d'éclairage, et ne permet pas non plus de corriger les différences d'aberration chromatique entre le faisceau d'éclairage et le faisceau à détecter revenant de l'objet observé. Elle se traduit donc par une diminution de la qualité des images obtenues. Cette solution est celle le plus couramment adoptée pour les systèmes multipoints lorsque un échange aisé d'un miroir séparateur est souhaité. Par exemple cette solution est utilisée dans les systèmes représentés sur la figure 3 du brevet US 5,162,941, sur la figure 3 du brevet US 6,028,306 , sur la figure 18 de la demande de brevet PCT/FR01/02890 et sur la figure la du brevet DE 198 24 460 A1. L'ensemble de ces systèmes permettent l'obtention d'une image fidèle de l'objet observé malgré les erreurs de positionnement du miroir dichroïque.

La demande de brevet US 2002/0097484 décrit un dispositif optique confocal monopoint évitant la plupart des problèmes mentionnés ci-dessus. En particulier, contrairement à la solution (b), il ne nécessite pas d'ajustements. Par ailleurs, contrairement à la solution (d), le faisceau d'éclairage ne passe pas par le trou microscopique ce qui permet de régler le trou microscopique indépendamment du faisceau d'éclairage et de corriger les différences d'aberration chromatique entre le faisceau d'éclairage et le faisceau à détecter. Contrairement à la solution (a) il ne nécessite pas des chemins optiques excessivement longs.

### Description de l'invention

L'invention a pour objectif la suppression des difficultés techniques mentionnées ci-dessus et liées aux solutions (a) (b) et (d) mais dans une configuration utilisant un éclairage multipoints. Partant du document US 2002/0097484, il s'agit donc d'obtenir une configuration multipoints ayant par ailleurs les mêmes propriétés favorables que le système décrit par le document US 2002/0097484.

Toutefois le principe décrit dans la demande de brevet US 2002/0097484 n'est pas adapté à un système multipoint. En effet, si le système décrit dans la demande de brevet US 2002/0097484 est utilisé tel quel avec un éclairage multipoints, une erreur de positionnement en rotation du bloc séparateur 14 de la figure 1 de ce brevet autour d'un axe vertical dans le sens de la figure se traduit par une rotation du réseau de points éclairés, qui fausse la détection et la reconstitution de l'image, ne permettant pas l'obtention d'une image fidèle de l'objet observé. Il est donc nécessaire de trouver une solution autre que l'adaptation directe du système décrit dans la demande de brevet US 2002/0097484 à un éclairage multipoint.
A cette fin, l'invention consiste en un dispositif optique confocal pour éclairer au moins un point éclairé (309) à l'aide d'un faisceau d'éclairage provenant d'une source d'éclairage (300) et focalisé sur le point éclairé, et pour focaliser sur un trou microscopique (306) associé au point éclairé un faisceau à détecter provenant du point éclairé, comprenant :
- un miroir de séparation (321) traversé par un premier faisceau (FD) et réfléchissant un deuxième faisceau (FE), un des premier et deuxième faisceau étant constitué par le faisceau d'éclairage (FE), et l'autre étant constitué par le faisceau à détecter (FD),
- un miroir de renvoi sensiblement parallèle au miroir de séparation et solidaire du miroir de séparation, l'ensemble constitué par le miroir de renvoi et le miroir de séparation étant échangeable,
   caractérisé par les faits suivants :
   - il est adapté pour éclairer une pluralité de points éclairés à l'aide d'une pluralité de faisceaux d'éclairage et pour focaliser sur une pluralité de trous microscopiques les faisceaux à détecter provenant de la pluralité de points éclairés.
   - le miroir de renvoi est disposé pour réfléchir le deuxième faisceau.

Par exemple, le miroir de séparation peut être un miroir dichroïque et le miroir de renvoi peut être un miroir uniquement réfléchissant. Le miroir de séparation peut également être un miroir partiellement transparent (séparateur de faisceau).

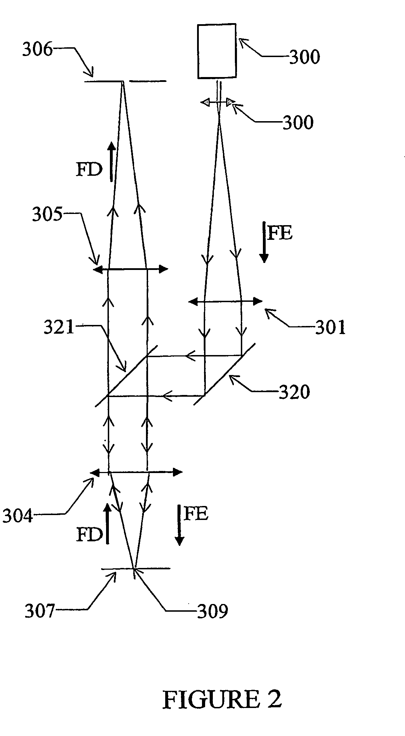

Si le miroir de séparation était positionné indépendamment du miroir de renvoi, une erreur de positionnement du miroir de séparation affecterait la direction du second faisceau lumineux, qui ne pourrait donc pas être considérée comme reproductible lorsque le miroir de séparation est déplacé hors du chemin optique puis remis en place. Le fait que les deux miroirs soient solidaires a pour conséquence que la direction du second faisceau en sortie du bloc séparateur n'est pas affectée par les erreurs de positionnement de l'ensemble du bloc séparateur. En effet, après réflexion sur deux miroirs parallèles entre eux, un faisceau lumineux retrouve exactement sa direction initiale, ce quelque soit l'angle entre le faisceau et les miroirs. Cette propriété distingue l'invention du système décrit dans la demande de brevet numéro US 2002/0097484. En effet, dans le document US 2002/0097484, le miroir de renvoi ne réfléchit pas le second faisceau : il réfléchit le premier faisceau, c'est-à-dire que le miroir de renvoi et le miroir de séparation ne réfléchissent pas le même faisceau. Dans le document US 2002/0097484, le second faisceau lumineux et le premier faisceau lumineux sont chacun réfléchi une seule fois et donc leur direction est affectée par les erreurs de positionnement du bloc séparateur, comme illustré sur la figure 2B du document US 2002/0097484.

On vérifie également qu'une erreur de positionnement en translation du bloc séparateur suivant l'invention n'affecte pas les faisceaux lumineux, dont ni la position ni la direction ne sont affectés en entrée comme en sortie du bloc séparateur.

Toutefois, la présence d'un miroir de renvoi solidaire du miroir de séparation et parallèle au miroir de séparation ne suffit pas éliminer toute sensibilité du système aux erreurs de positionnement du bloc séparateur ainsi formé. Une erreur de positionnement en rotation du bloc séparateur se traduit en effet par une translation correspondante du second faisceau lumineux, bien que la direction de ce faisceau reste constante. Cette translation peut se traduire par une perte de la conjugaison optique entre le point éclairé et le trou microscopique.

Selon l'invention, ce problème est résolu en plaçant lesdits miroirs de séparation et de renvoi (donc le bloc séparateur) dans une zone afocale, dans laquelle le faisceau d'éclairage et le faisceau à détecter sont sensiblement parallèles.

Du fait que le bloc séparateur est placé dans une zone afocale, une direction du faisceau au niveau du bloc séparateur correspond à un point dans un plan ou les faisceaux sont focalisés, et donc la position d'un tel point éclairé (et par suite la conjugaison entre le point de focalisation du faisceau d'éclairage et le trou microscopique) n'est pas affectée par les erreurs de positionnement du bloc séparateur, tant en rotation qu'en translation.

La position des points éclairés n'étant pas affectée par les erreurs de positionnement du bloc séparateur, le système n'est pas affecté par la rotation du réseau de points éclairés qui fausse la détection et la reconstitution de l'image dans la demande de brevet numéro US 2002/0097484.

Le miroir de séparation peut être par exemple un miroir dichroïque ou un miroir partiellement transparent neutre en longueur d'onde. Le miroir de renvoi est de préférence un miroir totalement réfléchissant.

Afin de pouvoir échanger le bloc séparateur dispositif selon l'invention comprend de préférence une pluralité de blocs séparateurs constitués chacun d'un miroir de séparation et d'un miroir de renvoi correspondant, et un moyen pour placer alternativement l'un ou l'autre des blocs séparateurs sur le chemin optique. Ce moyen peut être par exemple un coulisseau ou une roue tournant autour de son axe.

Si les miroirs de séparation et de renvoi ne sont pas parfaitement parallèles, la direction du second faisceau en sortie du bloc séparateur peut être légèrement modifiée par rapport à sa direction en entrée du bloc séparateur. Pour que plusieurs blocs séparateurs puissent être échangés sans perte de conjugaison entre le point éclairé et le trou microscopique, il est nécessaire que tous les blocs échangeables génèrent la même variations de direction des faisceaux, ce avec une très grande précision. Ceci est difficile à réaliser avec des blocs séparateurs comportant plusieurs pièces assemblées. Selon une version préférée de l'invention, le miroir de séparation et le miroir de renvoi sont placés sur deux faces opposées d'une lame à faces parallèles. Cette lame est disposée pour que :
- le trajet optique du deuxième faisceau comporte successivement une première traversée de la lame à faces parallèles, une réflexion sur un premier miroir, une seconde traversée de la lame à faces parallèles, une réflexion sur un deuxième miroir, et une troisième traversée de la lame à faces parallèles, un des premier et deuxième miroir étant le miroir de renvoi et l'autre étant le miroir de séparation,
- et pour que le trajet optique du premier faisceau comporte une traversée de la lame à faces parallèles et une traversée du miroir de séparation.
   Le miroir de séparation et le miroir de renvoi sont par exemple réalisés par dépôts de couches minces sur la lame à faces parallèles. La lame doit être suffisamment épaisse pour permettre la séparation effective des faisceaux lumineux. Dans ces conditions, un bon parallélisme des faces des lames constituant plusieurs blocs séparateurs suffit à assurer l'interchangeabilité de ces blocs. Ceci est aisément réalisable dans un atelier d'optique. Si les lames constituant des blocs séparateurs mutuellement échangeables n'ont pas des faces parfaitement parallèles, l'angle entre ces faces doit être le même pour tous les blocs séparateurs mutuellement échangeables.
   La lame à faces parallèle permettant la séparation des faisceaux lumineux fait partie intégrante de l'invention, au même titre que le dispositif confocal dans son ensemble. L'invention consiste donc également en un bloc séparateur destiné à un dispositif optique confocal, caractérisé par le fait qu'il est constitué par une lame à faces parallèles,
- une première face de ladite lame comportant une première zone sur laquelle un miroir dichroïque ou partiellement réfléchissant est réalisé par dépôt d'au moins une couche mince, destinée à être traversé par un premier faisceau lumineux et à réfléchir un second faisceau lumineux,
- la première face de ladite lame comportant une deuxième zone non réfléchissante, destinée à être traversée par le second faisceau lumineux,
- une deuxième face de ladite lame, opposée à la première face, comportant une troisième zone sur laquelle un miroir de renvoi est réalisé par dépôt d'au moins une couche mince, destinée à réfléchir le second faisceau lumineux,
- la deuxième face de ladite lame comportant également une quatrième zone non réfléchissante, destinée à être traversée par le premier faisceau lumineux et par le second faisceau lumineux.

En effet un tel bloc séparateur permet de séparer un premier faisceau lumineux d'un second faisceau lumineux sans altérer la direction de ces faisceaux. Il est destiné prioritairement à être utilisée dans un microscope confocal, mais peut également être utilisée dans d'autres dispositifs nécessitant l'échange reproductible d'un bloc séparateur n'altérant pas la direction des faisceaux lumineux.

### Brève description des figures

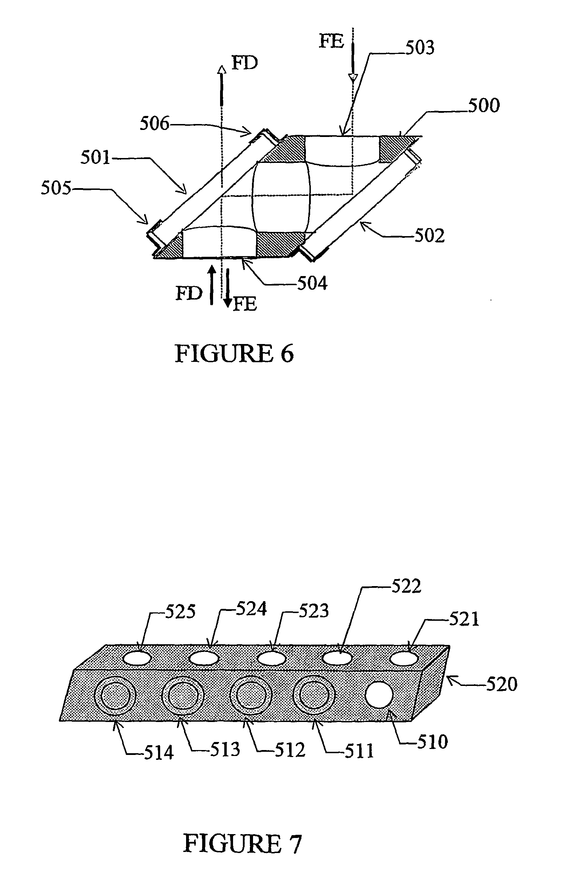

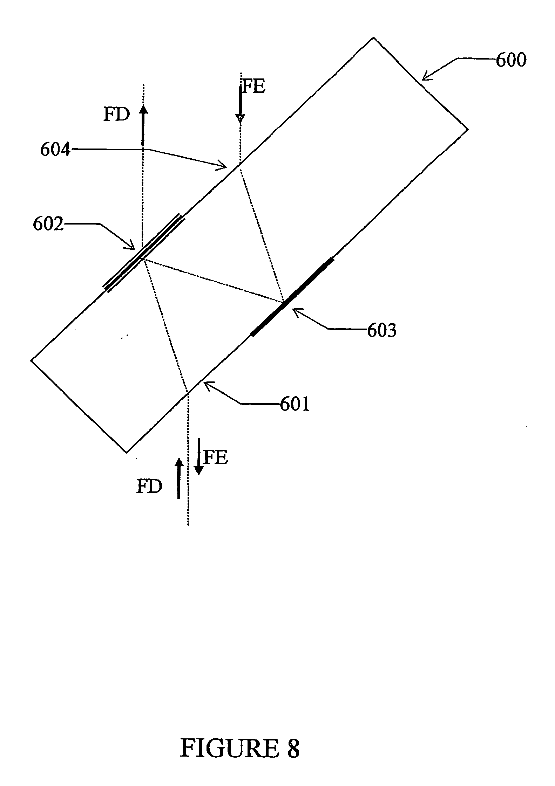

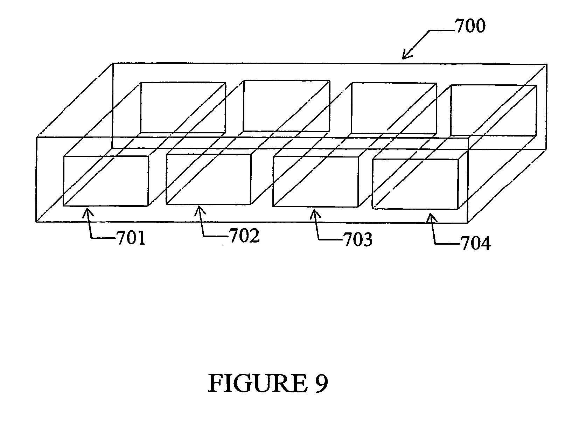

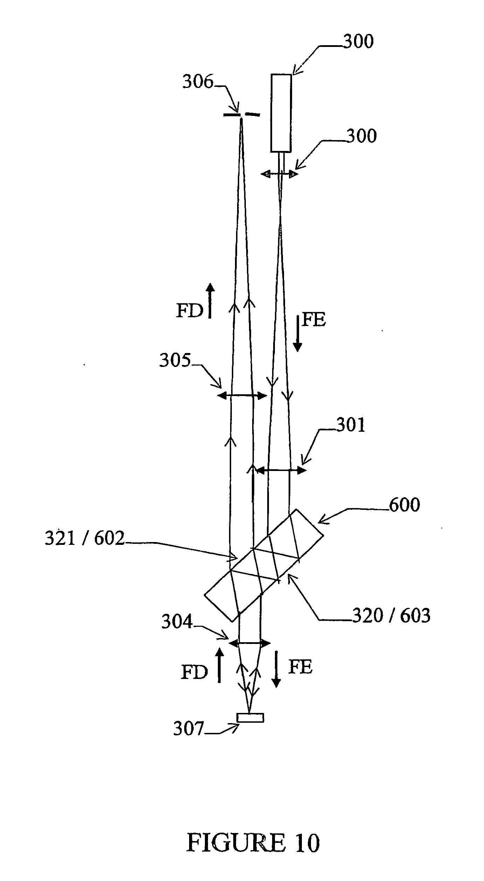

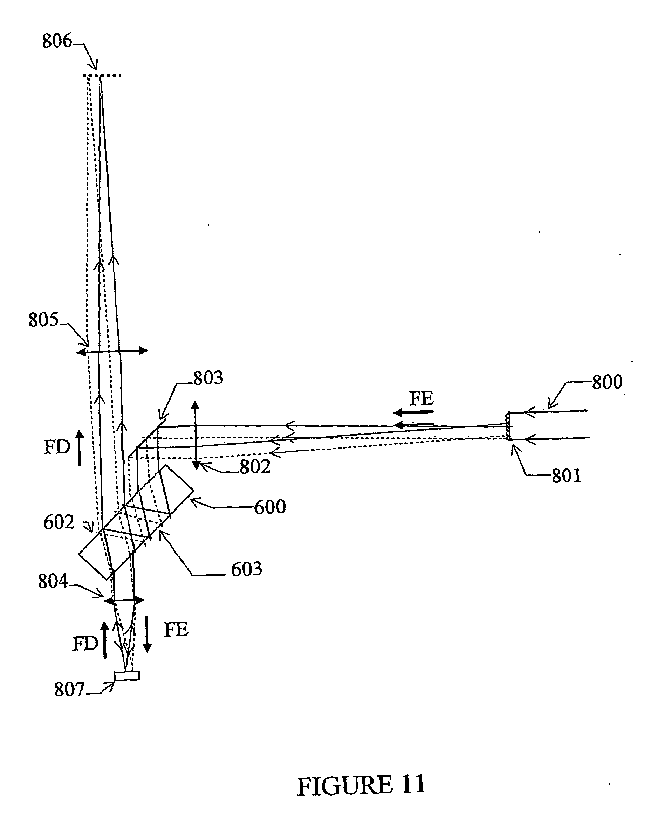

La figure 1 montre un dispositif optique confocal selon l'art antérieur. La figure 2 montre le principe optique du dispositif optique confocal suivant l'invention. La figure 3 montre en perspective un bloc séparateur suivant l'invention. La figure 4 montre le même bloc séparateur en coupe. La figure 5 montre plusieurs blocs séparateurs associés au sein d'un coulisseau de changement de miroirs. La figure 6 montre en coupe un autre type de bloc séparateur. La figure 7 montre un coulisseau associant plusieurs blocs séparateurs du type représenté sur la figure 6. La figure 8 montre un type préféré de bloc séparateur. La figure 9 montre l'association dans un coulisseau de plusieurs blocs séparateurs du type représenté sur la figure 8. La figure 10 montre un dispositif confocal monopoint suivant l'invention utilisant le bloc séparateur de la figure 8. La figure 11 montre un dispositif confocal multipoints suivant l'invention utilisant le bloc séparateur de la figure 8.

### Modes de réalisation

La figure 2 représente le principe optique du dispositif suivant l'invention. Le système est identique à celui de la figure 1, mais le miroir de séparation 302 a été remplacé par le bloc séparateur constitué par le miroir de séparation 321 et le miroir de renvoi 320 et situé en zone afocale. Un seul faisceau d'éclairage a été représenté bien que le système ait vocation à être utilisé en multipoints.

Les figures 3 et 4 montrent un mode de réalisation particulier du bloc séparateur. Celui-ci comporte une pièce de verre 403 comportant une surface 401 sur laquelle est réalisé le miroir de séparation, et une surface 400 sur laquelle est réalisé le miroir de renvoi. Il est nécessaire d'utiliser une seconde pièce en verre 402 de manière à ne pas perturber la trajectoire de la partie du faisceau qui traverse le miroir de séparation. Les trajets optiques des faisceaux d'éclairage FE et de détection FD ont été représentés par des pointillés. Comme indiqué sur la figure 5, plusieurs blocs séparateurs indépendants 410, 411, 412, peuvent être associés dans un coulisseau 414 permettant de les amener successivement dans le trajet optique.

Eventuellement, le coulisseau peut ne comporter qu'un seul bloc séparateur 412 en plus de l'ensemble 413, et dans ce cas il sert simplement à positionner ou à supprimer le bloc séparateur. En règle générale, il est souhaitable d'avoir une très grande précision dans le parallélisme entre les faces 400 et 401 et dans le parallélisme entre les faces 404 et 406 de manière à éviter que deux blocs séparateurs distincts dirigent le faisceau dans des directions différentes. Toutefois, dans le cas ou seulement un bloc séparateur 413 est utilisé, cette précision est moins essentielle car elle affecte peu la reproductibilité des propriétés de conjugaison lorsque le même ensemble est mis en place, enlevé et remis en place. Les faces 404, 406, 405 doivent également être parfaitement parallèles entre elles.

La figure 6 montre un autre type de bloc séparateur selon l'invention. Celui-ci comprend un support 500 perçé de trous pour laisser passer le faisceau lumineux, sur lequel sont positionnés un miroir de séparation 501 et un miroir de renvoi 502. Le faisceau d'éclairage passe par le trou 503, est réfléchi par le miroir de renvoi 502, est réfléchi par le miroir de séparation 501, et quitte le dispositif par le trou 504. Les miroirs 501 et 502 sont réalisés par dépôt d'une couche réfléchissante sur des lames de verre. Ils sont maintenus en appui sur les surface du support 500 par des éléments en acier à ressort, par exemple 505 et 506, qui appliquent une pression sur la périphérie des miroirs. Ils peuvent également être fixés par une fine couche de colle. Si le support 500 est lui-même en verre, un « collage moléculaire » est également possible. Plusieurs blocs séparateurs peuvent être associés en un seul coulisseau. Dans ce cas, pour que ces ensembles soient aisément interchangeables, il est nécessaire que le parallélisme entre les surfaces sur lesquelles sont positionnés respectivement le miroir de redirection 502 et le miroir de séparation 501 soit réalisé avec une précision extrême. Cette contrainte peut être allégée en réalisant en une seule pièce plusieurs supports du type indiqué par la figure 6. Par exemple la figure 7 montre un support multiple 520, comportant des premiers miroirs partiellement transparents 511 à 514 correspondant au miroir 501 de la figure 6, un trou 510, et des trous 521 à 525 correspondant au trou 503 de la figure 6. Une bonne planéité des surfaces du support multiple ainsi réalisé suffit en effet pour obtenir une bonne reproductibilité de la direction du faisceau, ce même lorsque plusieurs miroirs partiellement transparents sont successivement utilisés et lorsque un léger défaut de parallélisme subsiste entre les surfaces des deux miroirs 501, 502. Toutefois, la mise en position des miroirs de séparation et de renvoi sur leurs surfaces d'appui reste difficile à réaliser avec la précision nécessaire.

Les coulisseaux peuvent être motorisés. Toutefois il est également possible de monter plusieurs blocs séparateurs sur une roue tournant autour d'un axe, ce qui permet de diminuer les frottements par rapport à un système de coulisseau et donc de faciliter la motorisation.

La figure 8 montre un mode de réalisation préféré du bloc séparateur permettant de réaliser sans difficultés techniques excessives un bloc séparateur indépendant et aisément interchangeable. En effet, les modes de réalisation décrits précédemment sont difficiles à mettre en oeuvre avec la précision nécessaire pour que des blocs séparateurs distincts soient interchangeables sans perturber les relations de conjugaison point à point entre les différents plans images du dispositif de l'invention. Le bloc séparateur représenté figure 8 résout ce problème. Il est constitué d'une lame à faces parallèles 600, suffisamment épaisse, sur laquelle le miroir de séparation 602 est réalisé par dépôt d'une couche mince (par exemple un dépôt multicouches dans le cas d'un miroir dichroïque) et le miroir de renvoi 603 est également réalisé par dépôt d'une couche mince (typiquement une couche métallique ou un dépôt multicouches). Le faisceau d'éclairage FE pénètre dans la lame à faces parallèles par une zone 604 qui peut être traitée antiréflexion, la traverse et parvient au miroir de renvoi 603 qui le réfléchit. Il traverse à nouveau la lame à faces parallèles et est réfléchi par le miroir de séparation 602. Il traverse une dernière fois la lame à faces parallèles qu'il quitte par la zone 601 qui peut être traitée antiréflexion. Le faisceau à détecter FD pénètre dans la lame par la zone 601 , la traverse, parvient au miroir 602 et le traverse. Comme indiqué sur la figure 9, plusieurs blocs séparateurs 701, 702, 703, 704 du type représenté figure 8 peuvent être associés dans un coulisseau 700 permettant de passer d'un bloc à l'autre. La lame à faces parallèles peut typiquement être en verre et la réalisation de deux faces parfaitement parallèles sur une lame de verre ne pose pas de difficultés technologiques. Les dimensions de la lame à faces parallèles dépendent de la largeur des faisceaux et peuvent typiquement être de 15mm (épaisseur séparant les faces portant le miroir de séparation 602 et le miroir 603) ×15mm (largeur) x45 mm (longueur). Cette solution permet donc d'obtenir à un coût acceptable des blocs séparateurs facilement interchangeables destinés par exemple à être montés sur des roues ou des coulisseaux.

Ce dispositif génère un décalage latéral des faisceaux lumineux qui peut être compensé par un décalage correspondant des lentilles de la figure 2. La figure 10 représente, à titre d'exemple, la figure 2 modifiée pour le cas de l'utilisation de la lame à faces parallèles 600 décrite figure 8. On a gardé les mêmes numérotations que sur la figure 2, en ajoutant les numéros 602 et 603 utilisés sur la figure 8 et correspondant respectivement aux miroirs 321 et 320 de la figure 2. La figure 11 représente un mode de réalisation préféré de l'invention utilisant le bloc séparateur décrit figure 8. Un faisceau laser collimaté 800 est séparé par le réseau de microlentilles 801 en une pluralité de faisceaux d'éclairage FE. Sur la figure on a représenté un de ces faisceaux en traits pleins et un autre en pointilés. Les faisceaux d'éclairage traversent ensuite la lentille 802 après laquelle chaque faisceau d'éclairage est sensiblement parallèle. Ils sont réfléchis par le miroir 803. Les faisceaux d'éclairage parviennent ensuite au bloc séparateur constitué par la lame à faces parallèle 600. Ils entrent dans la lame, sont réfléchis par les miroirs 603 et 602, puis ressortent de la lame. Ils traversent l'objectif 804 et sont focalisés en des points éclairés de l'objet 807. Les faisceaux à détecter FD provenant des points éclairés traversent ensuite l'objectif 804, traversent la lame à faces parallèle 600 et le miroir 602, traversent la lentille 805 et sont focalisés sur les trous du réseau de trous microscopiques 800. On n'a pas représenté le dispositif de balayage qui peut typiquement être un miroir galvanométrique placé entre la lame à faces parallèles et l'objectif 804.

Sur les figures on a toujours fait traverser le miroir séparateur par le faisceau à détecter. Il est également possible que ce soit le faisceau à détecter qui soit réfléchi et le faisceau d'éclairage qui traverse le miroir de séparation, ce qui ne modifie pas la nature de l'invention.

### Applications industrielles

Le dispositif décrit permet l'échange rapide et fiable du miroir dichroïque dans les microscopes confocaux, en particulier multipoints. Cet échange est par exemple nécessaire lors de l'observaion de cellules marquées avec plusieurs marqueurs fluorescents, pour obtenir successivement des images correspondant à chaque marqueur.

## Revendications

1. Dispositif optique confocal pour éclairer au moins un point (309) à l'aide d'un faisceau d'éclairage provenant d'une source d'éclairage (300) et focalisé sur ledit point, et pour focaliser sur un trou microscopique (306) associé au point éclairé un faisceau à détecter provenant du point éclairé, comprenant :
- un miroir de séparation (321) traversé par un premier faisceau (FD) et réfléchissant un deuxième faisceau (FE), un des premier et deuxième faisceau étant constitué par le faisceau d'éclairage (FE), et l'autre étant constitué par le faisceau à détecter (FD),
- un miroir de renvoi sensiblement parallèle au miroir de séparation et solidaire du miroir de séparation, l'ensemble constitué par le miroir de renvoi et le miroir de séparation étant échangeable,
**caractérisé par** les faits suivants :
- il est adapté pour éclairer une pluralité de points à l'aide d'une pluralité de faisceaux d'éclairage et pour focaliser sur une pluralité de trous microscopiques les faisceaux à détecter provenant de la pluralité de points éclairés, et
- le miroir de renvoi est disposé pour réfléchir le deuxième faisceau.

2. Dispositif optique selon la revendication 1, **caractérisé par le fait que** lesdits miroirs de séparation et de renvoi sont placés dans une zone afocale, dans laquelle les faisceaux d'éclairage et les faisceaux à détecter sont sensiblement parallèles.

3. Dispositif optique suivant une des revendications 1 à 2, **caractérisé par le fait que** le miroir de séparation (602) et le miroir de renvoi (603) sont placés sur deux faces opposées d'une lame à faces parallèles (600).

4. Dispositif optique suivant la revendication 3, **caractérisé par le fait que** le miroir de séparation et le miroir de renvoi sont réalisés par dépôts de couches minces sur la lame à faces parallèles.

5. Dispositif selon une des revendications 3 ou 4, **caractérisé par le fait que** la lame à faces parallèles est disposée pour que
- le trajet optique du deuxième faisceau (FE) comporte successivement une première traversée de la lame à faces parallèles, une réflexion sur un premier miroir, une seconde traversée de la lame à faces parallèles, une réflexion sur un deuxième miroir, et une troisième traversée de la lame à faces parallèles, un des premier et deuxième miroir étant le miroir de renvoi et l'autre étant le miroir de séparation, et
- le trajet optique du premier faisceau (FD) comporte une traversée de la lame à faces parallèles et une traversée du miroir de séparation.

6. Dispositif suivant une des revendications 1 à 5, **caractérisé par le fait que** ledit miroir de séparation est un miroir dichroïque et ledit miroir de renvoi est un miroir totalement réfléchissant.

7. Dispositif suivant une des revendications 1 à 5, **caractérisé par le fait que** ledit miroir de séparation est un séparateur de faisceau neutre en longueur d'onde et ledit miroir de renvoi est un miroir totalement réfléchissant.

8. Dispositif selon une des revendications 1 à 7, **caractérisé par le fait qu'**il comprend une pluralité de blocs séparateurs comprenant chacun un miroir de séparation et un miroir de renvoi correspondant, et **par le fait qu'**il comporte un moyen pour placer alternativement l'un ou l'autre des blocs séparateurs sur le chemin optique.

9. Dispositif suivant la revendication 8, **caractérisé par le fait que** ledit moyen pour placer est un coulisseau.

10. Dispositif suivant la revendication 8, **caractérisé par le fait que** ledit moyen pour placer est une roue tournant autour d'un axe et sur laquelle sont monté les blocs séparateurs.

11. Bloc séparateur destiné à un dispositif optique confocal suivant la revendication 1, **caractérisé par le fait qu'**il est constitué par une lame à faces parallèles,
- une première face de ladite lame comportant une première zone sur laquelle un miroir dichroïque ou partiellement réfléchissant est réalisé par dépôt d'au moins une couche mince, destinée à être traversé par un premier faisceau lumineux et à réfléchir un second faisceau lumineux,
- la première face de ladite lame comportant une deuxième zone non réfléchissante, destinée à être traversée par le second faisceau lumineux,
- une deuxième face de ladite lame, opposée à la première face, comportant une troisième zone sur laquelle un miroir de renvoi est réalisé par dépôt d'au moins une couche mince, destinée à réfléchir le second faisceau lumineux,
- la deuxième face de ladite lame comportant également une quatrième zone non réfléchissante, destinée à être traversée par le premier faisceau lumineux et par le second faisceau lumineux.

## Claims

1. Confocal optical device for illuminating at least one point (309) using an illuminating beam coming from an illumination source (300) and focused on said point, and for focusing on a microscopic hole (306) associated with the illuminated point a beam to be detected coming from the illuminated point, comprising:
- a beamsplitter (321) passed through by a first beam (FD) and reflecting a second beam (FE), one of the first and second beams being made up of the illuminating beam (FE), and the other made up of the beam to be detected (FD),
- a redirection mirror substantially parallel to the beamsplitter mirror and attached to the beamsplitter, the assembly consisting of the redirection mirror and the beamsplitter being exchangeable,
**characterised by** the following facts:
- it is adapted for illuminating a plurality of points using a plurality of illuminating beams and for focusing on a plurality of microscopic holes the beams to be detected coming from the plurality of illuminated points, and
- the redirection mirror is disposed in order to reflect the second beam.

2. Optical device according to Claim 1, **characterised by** the fact that said beamsplitter and redirection mirrors are placed in an afocal zone, in which the illuminating beams and the beams to be detected are substantially parallel.

3. Optical device according to one of Claims 1 to 2, **characterised by** the fact that the beamsplitter (602) and the redirection mirror (603) are placed on two opposite faces of a parallel window (600).

4. Optical device according to Claim 3, **characterised by** the fact that the beamsplitter and the redirection mirror are made by depositions of thin coatings on the parallel window.

5. Device according to either of Claims 3 or 4, **characterised by** the fact that the parallel window is disposed so that
- the optical path of the second beam (FE) comprises successively a first passing through the window with parallel faces, a reflection on a first mirror, a second passingthrough the parallel window, a reflection on a second mirror, and a third passing-through the parallel window, one of the first and second mirrors being the redirection mirror and the other being the beamsplitter, and
- the optical path of the first beam (FD) comprises a passing-through the parallel window and a passing-through the beamsplitter.

6. Device according to one of Claims 1 to 5, **characterised by** the fact that said beamsplitter is a dichroic mirror and said redirection mirror is a totally reflective mirror.

7. Device according to one of Claims 1 to 7, **characterised by** the fact that said beamsplitter is a beam separator that is neutral as regards wavelength and said redirection mirror is a totally reflective mirror.

8. Device according to one of Claims 1 to 7, **characterised by** the fact that it comprises a plurality of splitter units each comprising a beamsplitter and a corresponding redirection mirror, and by the fact that it comprises a means for alternately placing one or another of the splitter units on the optical path.

9. Device according to Claim 8, **characterised by** the fact that said means for placing is a slider.

10. Device according to Claim 8, **characterised by** the fact that said means for placing is a wheel turning about an axis and on which the splitter units are mounted.

11. Beamsplitter unit intended for a confocal optical device according to Claim 1, **characterised by** the fact that it consists of a parallel window,
- a first face of said window comprising a first area on which a dichroic or partially reflective mirror is made by deposition of at least one thin coating, intended to be passed through by a first light beam and to reflect a second light beam,
- the first face of said window comprising a second non-reflective area, intended to be passed through by the second light beam,
- a second face of said window, opposite to the first face, comprising a third area on which a redirection mirror is made by deposition of at least one thin coating, intended to reflect the second light beam,
- the second face of said window also comprising a fourth non-reflective area, intended to be passed through by the first light beam and by the second light beam.

## Patentansprüche

1. Konfokale optische Vorrichtung zur Ausleuchtung mindestens eines Punkts (309) mit Hilfe eines Beleuchtungsstrahlenbündels, welches aus einer Lichtquelle (300) stammt und auf den genannten Punkt fokussiert ist, und zur Fokussierung eines abzutastenden Strahlenbündels, das von dem beleuchteten Punkt kommt, auf ein zu dem beleuchteten Punkt gehöriges mikroskopisches Loch (306), welche umfasst:
- einen Strahlteiler (321), welcher von einem ersten Strahlenbündel (FD) durchlaufen wird und ein zweites Strahlenbündel (FE) reflektiert, wobei das erste oder das zweite der beiden Strahlenbündel durch das Beleuchtungsstrahlenbündel gebildet wird (FE), und das andere der beiden Strahlenbündel durch das abzutastende Strahlenbündel (FD) gebildet wird,
- einen Umlenkspiegel, welcher im wesentlich parallel zum Strahlteiler angeordnet und fest mit dem Strahlteiler verbunden ist, wobei die gesamte, aus dem Umlenkspiegel und dem Strahlteiler bestehende Baugruppe austauschbar ist,
und die durch folgende Merkmale **gekennzeichnet** ist:
- sie ist so eingestellt, dass eine Vielzahl von Punkten mit Hilfe einer Vielzahl von Beleuchtungsstrahlenbündeln ausgeleuchtet wird, und dass die abzutastenden Strahlenbündel, die von der Vielzahl der ausgeleuchteten Punkte kommen, auf eine Vielzahl mikroskopischer Löcher fokussiert werden, und
- der Umlenkspiegel ist so angeordnet, dass er das zweite Strahlenbündel reflektiert.

2. Optische Vorrichtung gemäß dem Patentanspruch 1, **dadurch gekennzeichnet, dass** der genannte Strahlteiler und der genannte Umlenkspiegel in einem afokalen Bereich angeordnet sind, in welchem die Beleuchtungsstrahlenbündel und die abzutastenden Strahlenbündel etwa parallel sind.

3. Optische Vorrichtung gemäß einem der Patentansprüche 1 bis 2, **dadurch gekennzeichnet, dass** der Strahlteiler (602) und der Umlenkspiegel (603) auf zwei gegenüber liegenden Seiten einer Planparallelplatte (600) angeordnet sind.

4. Optische Vorrichtung gemäß dem Patentanspruch 3, **dadurch gekennzeichnet, dass** der Strahlteiler und der Umlenkspiegel durch Aufbringen dünner Schichten auf die Planparallelplatte realisiert sind.

5. Vorrichtung gemäß einem der Patentansprüche 3 oder 4, **dadurch gekennzeichnet, dass** die Planparallelplatte so angeordnet ist, dass:
- das zweite Strahlenbündel (FE) auf seinem Weg zunächst die Planparallelplatte durchläuft, dann an einem ersten Spiegel reflektiert wird, ein zweites Mal die Planparallelplatte durchläuft, dann an einem zweiten Spiegel reflektiert wird, und noch ein drittes Mal die Planparallelplatte durchläuft, wobei der erste oder der zweite der beiden Spiegel der Umlenkspiegel ist, und wobei der andere Spiegel der Strahlteiler ist, und
- das erste Strahlenbündel (FD) auf seinem Weg durch die Planparallelplatte und durch den Strahlteiler läuft.

6. Vorrichtung gemäß einem der Patentansprüche 1 bis 5, **dadurch gekennzeichnet, dass** der genannte Strahlteiler ein dichroitischer Spiegel und der genannte Umlenkspiegel ein total reflektierender Spiegel ist.

7. Vorrichtung gemäß einem der Patentansprüche 1 bis 5, **dadurch gekennzeichnet, dass** der genannte Strahlteiler ein wellenlängenneutraler Strahlenteiler und der genannte Umlenkspiegel ein total reflektierender Spiegel ist.

8. Vorrichtung gemäß einem der Patentansprüche 1 bis 7, **dadurch gekennzeichnet, dass** sie eine Vielzahl von Strahlenteilerblöcken umfasst, welche jeweils einen Strahlteiler und einen entsprechenden Umlenkspiegel umfassen, und dadurch, dass sie ein Mittel umfasst, mit dem abwechselnd der eine oder andere der Strahlenteilerblöcke im Lichtweg platziert wird.

9. Vorrichtung gemäß dem Patentanspruch 8, **dadurch gekennzeichnet, dass** das genannte Mittel ein gleitender Schieber ist.

10. Vorrichtung gemäß dem Patentanspruch 8, **dadurch gekennzeichnet, dass** es sich bei dem genannten Mittel zum Platzieren um ein Rad handelt, welches sich um eine Achse dreht, und auf welchem die Teilerblöcke montiert sind.

11. Strahlteilerblock für eine konfokale optische Vorrichtung gemäß dem Patentanspruch 1, **dadurch gekennzeichnet, dass** er aus einer Planparallelplatte besteht, wobei
- eine erste Fläche der genannten Platte einen ersten Bereich enthält, in dem ein dichroitischer oder teilweise reflektierender Spiegel durch Aufbringen mindestens einer dünnen Schicht realisiert ist, welche dazu bestimmt ist, von einem ersten Lichtstrahlenbündel durchlaufen zu werden und ein zweites Lichtstrahlenbündel zu reflektieren,
- die erste Fläche der genannten Platte einen zweiten, nicht reflektierenden Bereich enthält, welcher dazu bestimmt ist, von dem zweiten Lichtstrahlenbündel durchlaufen zu werden,
- eine zweite Fläche der genannten Platte, welche der ersten Fläche gegenüber liegt, einen dritten Bereich enthält, in dem ein Umlenkspiegel durch Aufbringen mindestens einer dünnen Schicht realisiert ist, welche dazu bestimmt ist, das zweite Lichtstrahlenbündel zu reflektieren,
- die zweite Fläche der genannten Platte auch einen vierten, nicht reflektierenden Bereich enthält, welcher dazu bestimmt ist, von dem ersten und dem zweiten Lichtstrahlenbündel durchlaufen zu werden.
